(19) Europäisches Patentamt
European Patent Office
Office européen des brevets

(11) **EP 3 187 950 B1**

(12) **EUROPEAN PATENT SPECIFICATION**

(45) Date of publication and mention of the grant of the patent:
**27.11.2019 Bulletin 2019/48**

(51) Int Cl.:
***G05B 23/02*** *(2006.01)*

(21) Application number: **16181305.0**

(22) Date of filing: **26.07.2016**

(54) **A METHOD FOR MANAGING ALARMS IN A CONTROL SYSTEM**

VERFAHREN ZUR VERWALTUNG VON ALARMEN IN EINEM STEUERUNGSSYSTEM

PROCÉDÉ DE GESTION D'ALARMES DANS UN SYSTÈME DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2015 IN 7124CH2015**

(43) Date of publication of application:
**05.07.2017 Bulletin 2017/27**

(73) Proprietor: **ABB Schweiz AG**
**5400 Baden (CH)**

(72) Inventors:
• **Kaushikghosh, K.**
**560066 Bangalore (IN)**
• **Jinendra, Gugaliya**
**560076 Bangalore (IN)**
• **Mithun, Acharya**
**Cary, NC 27519 (US)**
• **Hollender, Martin**
**69221 Dossenheim (DE)**
• **Dagnino, Aldo**
**Cary, NC 27519 (US)**
• **Dix, Marcel**
**68167 Mannheim (DE)**
• **Jacobs, Sam**
**Raleigh, NC 27606 (US)**

(74) Representative: **Zimmermann & Partner**
**Patentanwälte mbB**
**Josephspitalstr. 15**
**80331 München (DE)**

(56) References cited:
**EP-A1- 2 811 356      EP-A1- 2 894 813**
**WO-A1-94/19912      US-A- 5 581 242**
**US-A1- 2010 289 638**

• **KURZ HANS: "Alarmmanagement - Ziele, Erfahrungen, Nutzen", INTERNET CITATION, 28 February 2008 (2008-02-28), pages 86-90, XP002663028, Retrieved from the Internet: URL:http://www.namur.de/fileadmin/media/Pr essespiegel/atp/atp_02_2008_Alarmmanageme n t.pdf [retrieved on 2011-11-08]**

**Description**

**FIELD OF INVENTION**

The present invention relates generally to a control system for an industrial environment and more specifically to management of alarms in the control systems for the industrial environment.

**BACKGROUND**

A Control System is used for control and regulation of a process or a plant in an industrial environment. Some of the environments where control systems may be utilized include, but are not limited to, chemical plants, petrochemical refineries, pulp and paper mills, nuclear power plants etc. In all such modern complex industrial environments, alarm systems form an essential part of the control system for monitoring plant state deviations and for attracting plant operators' attention to changes that require their intervention.

An alarm or alarm message is a notification that a fault or an abnormal event has occurred and an operator must take timely action. Each alarm message that is annunciated to the operator is also stored as a text message with various fields/ attributes in the plant alarm/event log database. Historical alarm/event log database therefore contains information about all the alarms messages/events that activated and returned to normal during the operation of the plant in the past.

The advance of distributed control systems (DCSs) in the process industry has made it possible to install many alarms cheaply and easily. While most alarms help operators to indicate a potential abnormality, not all of them have the same impact on the process operation. In such cases, the operator may get flooded with alarms and may not be able to react appropriately to important alarms, leading to major incidents and accidents in the plant.

To address the problem of alarm flooding and various other issues associated with alarms, various alarm rationalization techniques have been used. Generally, these techniques analyze historical event and alarm data to determine correlations between alarms, and on the basis of the correlations determine changes to the configuration of alarm systems. However, given the large volume of event and alarm data, such alarm techniques often take time and may not identify accurate correlations.

US 5,581, 242 discloses an alarm system in a plant for outputting a plurality of alarms with respect to devices constituting the plant and monitor information with respect to the devices. In this system, there is provided a unit for storing a table for correspondingly relating a plurality of alarm items to suppression reason items indicating that the display of the alarms can be suppressed. A generated alarm item and a generated event are specified by receiving the plurality of alarms and monitor information. A decision is made by reference to the table as to whether the generated alarm suppression reason item exists in the monitor information, the kind of generated alarm, and the generated event for each generated alarm item. An instruction is given to a display unit to suppress the display of alarms in which a decision is made that the suppression reason item exists.

Moreover, process plants often undergo lot of changes due to equipment wear and tear, changes in raw material quality and/or quantity, equipment performance etc. Therefore, the rules for alarm rationalization need a review from time to time. This review is often time consuming and takes considerable effort.

Therefore there is a need for improved system and method for managing alarms in the control system.

SUMMARY OF THE INVENTION

The above-mentioned shortcomings, disadvantages and problems are addressed herein which will be understood by reading and understanding the following specification.

In one aspect, the present invention a method for managing alarms in a control system in a process plant comprising a plurality of equipment. The control system comprises a notification server for generating and notifying a plurality of alarms messages based on a predetermined notification criteria, an operator station communicatively connected to the notification server, and a database comprising historical alarm data.

The method comprises receiving historical alarm data, wherein the historical alarm data includes data in relation to a plurality of alarm messages of a plurality of alarms, defining a set of alarms as one or more candidate alarms and set of alarms as non-candidate alarms from the plurality of alarms in the historical alarm data based on a predetermined criteria, identifying a plurality of historical data segments of predetermined segment length from the historical alarm data, wherein each segment from the plurality of historical data segments includes at least one alarm message of one candidate alarm from the one or more candidate alarms, determining a plurality of association scores corresponding to the plurality of non-candidate alarms, wherein an association score from the plurality of association score is indicative of an association between a corresponding non-candidate alarm from the historical alarm data, and a corresponding candidate alarm from one or more candidate alarms, wherein the association score is determined based on one or more instance of the corresponding non-candidate alarm the plurality of segments and the one or more instance of the corresponding candidate alarm in the plurality of segments, and modifying the predetermined notification criteria on the basis of the plurality of association scores wherein modifying the predetermined notification criteria includes one of prioritizing one or more non-candidate alarms associated with one or more candidate alarms, and suppressing one or more non-candidate alarms associated with one or more candidate alarms.

In an embodiment, the step of determining an association score further comprising determining a time difference between an at least one alarm message of a non-candidate alarm and the at least one alarm of candidate alarm in a historical data segment from the plurality of historical data segments.

In an embodiment, the method further comprises monitoring real time alarm data for calculating a plurality of validation scores for the one or more non-candidate alarm having corresponding association score greater than a predetermined threshold, and comparing the plurality of validation scores against one or more threshold values for validating the modified notification criteria.

In an embodiment, the method further comprises determining equipment associated with a set of non-candidate alarm having corresponding association scores greater than a predetermined threshold value, wherein the one or more alarm messages of the set of non-candidate alarm are generated after one or more alarm messages of a candidate alarm and determining asset utilization pattern of the equipment based on the historical alarm data.

Systems and methods of varying scope are described herein. In addition to the aspects and advantages described in this summary, further aspects and advantages will become apparent by reference to the drawings and with reference to the detailed description that follows.

BRIEF DESCRIPTION OF THE DRAWINGS

The subject matter of the invention will be explained in more detail in the following text with reference to preferred exemplary embodiments which are illustrated in the drawings, in which:

Figure 1 illustrates a system for managing alarms in a process plant, in accordance with various embodiments of the present invention;

Figure 2 illustrates a method for managing alarms in a process plant, in accordance with various embodiments of the present invention; and

Figure 3 illustrates one or more historical data segments from a historical alarm data, in accordance with various embodiments of the present invention.

DETAILED DESCRIPTION

In the following detailed description, reference is made to the accompanying drawings that form a part hereof, and in which is shown by way of illustration specific embodiments, which may be practiced. These embodiments are described in sufficient detail to enable those skilled in the art to practice the embodiments, and it is to be understood that other embodiments may be utilized and that logical, mechanical, electrical and other changes may be made without departing from the scope of the embodiments. The following detailed description is, therefore, not to be taken in a limiting sense.

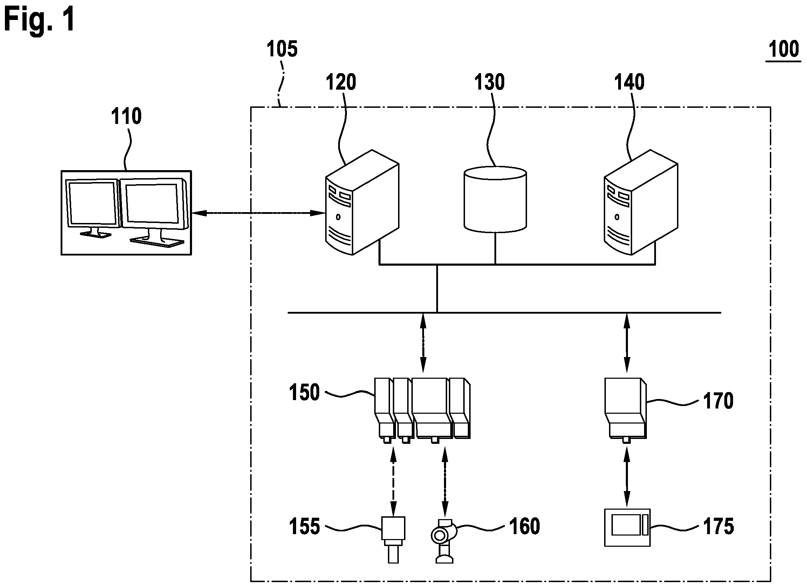

Figure 1 illustrates a system 100 for managing alarms in a process plant. The system 100 includes a control system 105. The control system 105 comprises a plurality of controllers (shown in figure 1 as controller 150 and controller 170), sensors (shown in the figure as sensor 155 and sensor 160) and actuators (not shown in figure 1) for controlling one or more equipment (not shown in figure 1) of the process plant. The sensors are connected to the equipment of the plant to measure a plurality of process parameters such as temperature, pressure, flow rate and the like. The sensors (155 and 160) provide the measured values of the process parameters to the controllers 150 and 170. The controllers 150 and 170 utilize the measure values of the process parameters from the sensors (155 and 160) to send control signals to the corresponding actuators in accordance with the set points associated with the process parameters and control logic of the controllers 150 and 170, to regulate the one or more processes in the process plant. In an embodiment, the controllers 150 and 170 are connected to a supervisory controller (shown in figure 1 as server 140) for receiving the set points.

Additionally, the control system 105 includes a notification server 120 for generating and notifying a plurality of alarms messages based on a predetermined notification criteria. The alarm messages generated from the notification server 120 are displayed on an operator station 110, which is communicatively coupled to the notification server 120 through a communication network.

An alarm message is a notification that a fault or an abnormal event has occurred and an operator must take timely action. Alarm messages correspond to a particular alarm. For example, an alarm "motor failure" associated with fault in a motor X can have a first alarm message generated at time $T_1$ and a second alarm message generated at time $T_2$.

In an embodiment, the notification server 120 generates alarm messages when a process parameter exceeds a threshold value or a threshold band. Upon generation of the alarm messages, the notification server 120 notifies the alarm message at the operator workstation 110 in accordance with the predetermined notification criteria. The predetermined notification criteria includes rules about alarm notification. In an embodiment, the predetermined notification criteria includes alarm suppression rules formulated based on alarm messages and operator action, alarm prioritization rules for prioritizing alarm messages relating to equipment failure, generating notifications about predicting certain alarms, etc.

Each alarm message that is annunciated to the operator and is stored as a text message with various attributes such as: time stamp, alarm source, condition, alarm description, priority, severity, alarm state in the plant event and alarm database 130. The plant event and alarm database 130 includes historical alarm data containing information about all the alarms messages/events which were activated during the operation of the plant in the past.

The notification server 120 is capable of analyzing historical alarm data stored in the plant event and alarm database 130 for determining associations or relationships between alarms. Based on the determined associations or relationships between the alarms, the notification server 120 modifies the pre-determined notification criteria.

For example, the notification server 120 determines one or more alarms as nuisance alarms and modifies the predetermined notification criteria to suppress or shelf such nuisance alarms. Similarly, the notification server 120 determines alarm which are indicative of certain important events or alarms and therefore modifies the predetermined notification criteria to prioritize alarm messages of such alarms.

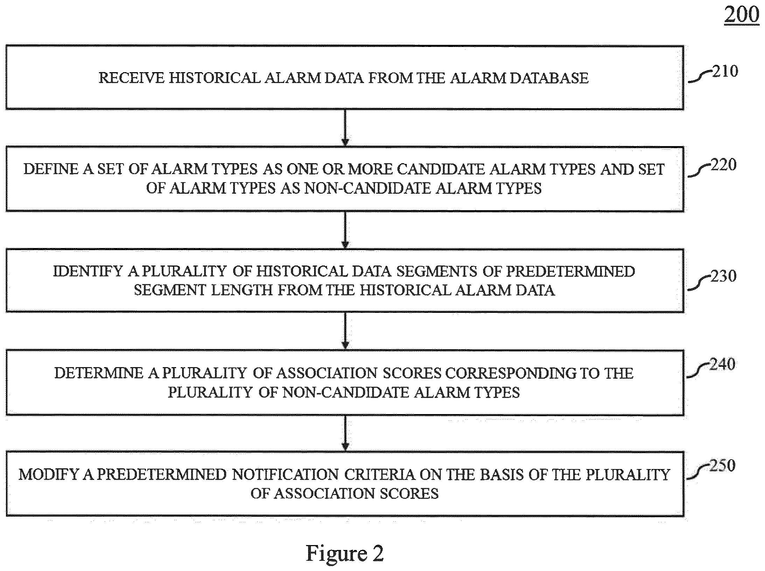

In an embodiment, the notification server 120 is capable of verifying the modified predetermined notification criteria on the basis of real time alarm data. In yet another embodiment, the notification server 120 can determine asset utilization information based on historic alarm data. These aspects are further explained in the description of figure 2.

Figure 2 illustrates a method 200 for managing alarms in the process plant. At step 201, the notification server 120 receives historical alarm data from the plant event and alarm database 130. As explained previously, the historical alarm data includes data in relation to a plurality of alarm messages of a plurality of alarms which have occurred in the past.

In an embodiment, upon receiving the historical alarm data from the database 130, the notification server 120 filters out information relating to frequently occurring alarms (chattering alarms, repeating alarms and fleeting alarms) from the historical alarm data. For example all alarms messages with a duration less than a predetermined threshold value are removed. In another example, all alarm messages of alarms that have occurred more times than a threshold value are removed. In yet another embodiment, the notification server 120 removes, except from the first alarm message, information of all subsequent alarm messages of an alarm, which occur within a fixed time window.

At step 220, the notification server 120 defines a set of alarms as one or more candidate alarms and set of alarms as non-candidate alarms from the plurality of alarms in the historical alarm data based on a predetermined criteria.

Candidate alarms are alarms that have significant impact on the process operation as compared to non-candidate alarms. The candidate alarms are often regarded as critical alarms as they are associated with events in the plant lead to shutdown of certain process equipment or section or unit or in worst case the entire plant, thus resulting in lots of production and economical loss. Some examples of candidate alarm includes are emergency alarms, tripping alarms, equipment failure alarms, etc.

Early prediction of critical events and taking subsequent corrective actions in order to prevent them can potentially lead to significant cost savings and increase operational efficiency. Therefore, the critical alarms or candidate alarms are of particular interest. In an embodiment, the notification server 120 defines one or more alarms as candidate alarms based on input from plant experts such as operators, engineers and the like. In yet another embodiment, the notification server 120 defines one or more alarms as candidate alarms based on a cause and effect matrix or a fault tree model available in the control system 105.

In an embodiment, the notification server 120 determines all the alarm messages of the one or more candidate alarms in the historical alarm data. The notification server 120 determines the number of alarm messages associated with each candidate alarm in the historical alarm data. If the number of alarm messages for a particular candidate alarm is less than a threshold value, the notification server 120 removes information relating to all the alarm messages of that particular candidate alarm from the historical alarm data, since there is too little occurrences of candidate alarm to derive any statistically meaningful conclusion about its associations .

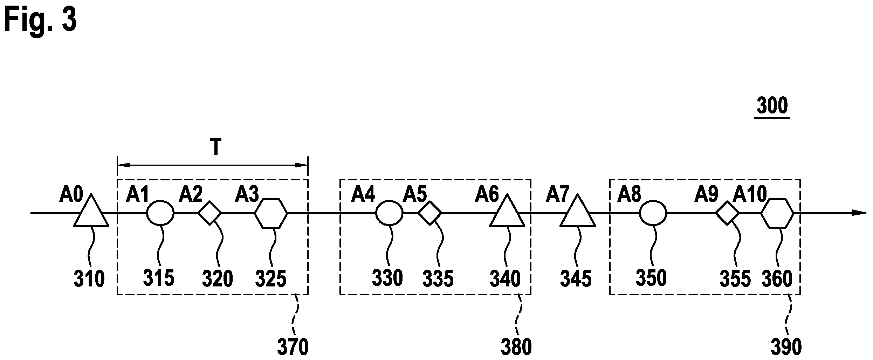

At step 230, the notification server 120 identifies a plurality of historical data segments of predetermined segment length from the historical alarm data. Each identified segment from the plurality of historical data segments includes at least one alarm message or one instance of one candidate alarm from the one or more candidate alarm s. This is further explained with reference to figure 3.

Figure 3 illustrates a time line indicating a plurality of instances of four alarms. The four alarms are indicated as triangle (associated with alarm message 310, alarm message 340, and alarm message 345), circle (associated with alarm message 315, alarm message 330, and alarm message 350), rhombus (associated with alarm message 320, alarm message 335, and alarm message 355) and hexagon (associated with alarm message 325, and alarm message 360). In the example, alarm rhombus is defined as a candidate alarm and the other alarm as defined as non-candidate alarms.

Accordingly, as the candidate alarm rhombus occurs at three instances, the notification server 120 creates identifies three historical data segments of predetermined duration 'T' from the historical data segment. The historical data segments are created around the instance at which the candidate alarm rhombus occurred. For example, the first historical data segment 370 is created around the alarm instance (or alarm message) 320 of the candidate alarm rhombus. In an embodiment, the historical data segment is created such that the instance of the candidate alarm lies in the center of the historical data segment.

At step 240, the notification server 120 determines a plurality of association scores corresponding to the plurality of non-candidate alarms. Each association score from the plurality of association score is indicative of an association between a corresponding non-candidate alarm from the historical alarm data, and a corresponding candidate alarm from one or more candidate alarms.

The notification server 120 determines each association score based on one or more instance of the corresponding non-candidate alarm and the one or more instance of the corresponding candidate alarm in the plurality of segments. Continuing the example illustrated in figure 3, the notification server 120 determines association scores for each non-candidate alarm in the three historical data segments.

As illustrated in figure 3, the first historical data segment 370 includes two instances (315 and 325) of non-candidate alarm circle and non-candidate alarm hexagon, the second historical data segment 380 includes two instances (330 and 340) of non-candidate alarm circle and non-candidate alarm triangle, and the third historical data segment 390 includes two instances (350 and 360) of non-candidate alarm circle and non-candidate alarm hexagon. Accordingly, the notification server 120 calculates the association score for the non-candidate alarm circle, non-candidate alarm triangle and non-candidate alarm hexagon.

In an embodiment, association score for an non-candidate alarm is calculated as a weighted average of a plurality of statistical scores (confidence score and co-occurrence score) which are calculated as mentioned below:

$$Confidence\,Score_{Candidate}^{Non-candidate} = \frac{N^{Non-candidate}}{N^{Candidiate}} \times 100\%$$

$$Co-occurrence\,Score_{Candidate}^{Non-candidate} = \frac{N^{Non-candidate}}{n^{Non-Candidiate}} \times 100\%$$

Where $N^{Candidiate}$ is total number of segments, $N^{Non-Candidiate}$ is number of segments containing non-candidate alarm, $n^{Non-Candidiate}$ is the total number of occurrences of non-candidate alarms in historical alarm data

Continuing the above mentioned example, the notification server 120 calculates the confidence and co-occurrence score of the non-candidate alarm circle as

$$Confidence\ Score^{Circle} = 3/3 \times 100 = 100\%$$

$$Co\text{-}occurrence\ Score^{Circle} = 3/3 \times 100 = 100\%$$

Similarly, the notification server 120 calculates the confidence and co-occurrence score of the non-candidate alarm triangle as

$$Confidence\ Score^{Triangle} = 1/3 \times 100 = 33\%$$

$$Co\text{-}occurrence\ Score^{Triangle} = 1/3 \times 100 = 33\%$$

Accordingly, in an embodiment, the association score is calculated using the equation given below

$$Association\ Score^{Non\text{-}Candidate} = W_1 \times Confidence\ Score^{Non\text{-}Candidate} + W_2 \times Co\text{-}occurrence\ score^{Non\text{-}Candidate}$$

Continuing the example

$$Association\ Score^{Circle} = .7 \times 100 + .3 \times 100 = 100$$

At step 250, the notification server 120 modifies the predetermined notification criteria on the basis of the plurality of association scores. The notification server 120 adds rules to prioritize alarm messages of one or more non-candidate alarms which have association scores greater than a threshold value and precede one or more candidate alarms by a sufficient duration (example of one hour).

Similarly, the notification server 120 adds rules to suppress alarm messages of one or more non-candidate alarms which have association scores greater than a threshold value and follow one or more candidate alarms within a small duration (example of few seconds).

Continuing the above mentioned example, the notification server 120 determines the non-candidate alarm which have an association score greater than 70%. The non-candidate alarm circle has an association score of 100% and always precedes the candidate alarm rhombus. Accordingly, the notification server 120 modified the predetermined notification criteria to prioritize notification of alarm messages of the non-candidate alarm circle.

As the confidence score of the non-candidate alarm triangle and the co-occurrence score of non-candidate alarm hexagon is below 70%, the notification server 120 does not use these non-candidate alarm for modification of the predetermined notification criteria.

In an embodiment, the notification server 120 calculates the average time difference between the a particular non-candidate alarm and a candidate alarm by averaging the time difference between instance of the non-candidate alarm and the corresponding instance of the candidate alarm in the corresponding data segment. In another embodiment, the notification server 120 calculates other statistical measures such as median, minimum, maximum and standard deviation of the time differences.

In an embodiment, the notification server 120 utilizes the average time difference associated with a non-candidate alarm for further determining if a modification is to be performed to the predetermined notification criteria. For example, when a non-candidate alarm having a high association score, precedes a candidate alarm and also the average time difference between this non-candidate alarm and the candidate alarm is reasonably high (>10 min), then the notification server 120 modifies the predetermined notification criteria by adding rules to prioritize alarm messages of this precursor non-candidate alarm for predicting the candidate alarm well in advance.

The notification server 120 modifies the notification criteria such that upon generation of an alarm message associated with a non-candidate alarm having an association score greater than a threshold value, the notification server 120 further generates a notification indicating potential occurrence of a candidate alarm associated with the non-candidate alarm.

For example, high inlet flow rate alarm message (a non-candidate alarm) to a vessel may come much before (>10 min) high-high pressure/level alarm message (a candidate alarm /critical alarm) in that vessel. Hence, the high inlet flow rate alarm can be used for predicting the critical high-high pressure/level alarm. On the other hand if these instances are associated non-candidate alarm (s) which consistently come just before (with a time lag of 10 min or less) instances of a candidate or critical alarm, although those non-candidate alarm (s) cannot be used for early prediction purpose because of the inadequate response time for the operators to take any possible corrective actions but these associated non-candidate alarm can be good candidate(s) for alarm hiding or suppression.

In an embodiment, the notification server 120 can identify root cause for a particular candidate alarm. The notification server 120 determines that a potential root cause is a non-candidate alarm whose instances precede the instances of candidate alarm with highest time difference and has very high association score.

In an embodiment, the notification server 120 is configured to validate the modified notification criteria. The notification criteria is validated and updated automatically by the notification server 120 using live stream of alarm data in online manner. This is explained below through a simple illustrative example.

In an example, the modified notification criteria includes a rule for prioritizing alarm messages of alarm "A" based on high association score between alarm A and candidate alarm B. The high association score indicates that alarm message of A always precedes alarm messages of alarm B within 10 minutes. Accordingly, whenever an alarm message of the alarm "A" popups in the plant during its operation, the rule $A \xrightarrow{10\ min} B$ in rule in the notification criteria gets triggered and the plant operators are simultaneously alerted with a message "Expect event B in about $10 \pm 2\ min$ time" where limits of this time bracket can be decided based on statistical property of time difference between alarm messages of alarm "A" and alarm messages of alarm "B".

Additionally, the notification server 120 also keeps track of whether the alarm message of the alarm B really occurs within a certain time interval (usually specified by max. and min. time differences between alarm messages of alarm A and alarm messages of alarm B in the historical alarm data) after every alarm message of the alarm A. All the instances where the association $A \xrightarrow{10\,min} B$ are true are counted as well as the number of failure cases in which the alarm message of alarm B does not occur after the alarm message of alarm A. The notification server 120 accordingly calculates a validation score i.e. the percentage of successful occurrence of the association A $\xrightarrow{10\,min} B$ as shown below in Equation (1) in real time on live alarm data.

$$P_{sucess} = \frac{N_{success}}{N_{fail} + N_{success}} \times 100 \qquad (1)$$

In the above equation, $N_{success}$ represents number of successful occurrence of alarm messages according to the association, the term $N_{fail}$ stands for number of failure cases where the alarm messages do not occur as per the association and $P_{success}$ is percentage of successful occurrence of the alarm messages as per the association.

When the $P_{success}$ or validation score computed using equation (1) above remains below certain user specified threshold (say 50%) for a few successive occurrences of the alarm A then the association $A \xrightarrow{10\,min} B$ is no longer valid and therefore, the rule associated with the association for prioritizing alarm messages of alarm A is no longer useful. Accordingly, the notification server 120 reiterates the above mentioned steps to modify the notification criteria as explained above.

Thus, the notification server 120 not only allows online validation of notification criteria using the live stream of alarm/event data but also modification of the notification criteria through constant monitoring of the associations between alarms.

In an embodiment, the notification server 120 utilizes the historical alarm data for identifying asset utilization patterns. The notification server 120 determines a set of non-candidate alarms which succeed the candidate alarms within a relatively short duration and have association scores above a threshold value. The notification server 120 utilizes information relating to this set of succeeding non-candidate alarms for identifying the assets and their asset utilization pattern. Such data can then be used to optimize the asset utilization in a given plant. This aspect is further explained using an example described below.

In an exemplary embodiment, the process plant includes a conveyor belt having first backup motor and a second backup motor. When the primary motor of the conveyor belt fails, an alarm message of a candidate alarm "conveyor belt failure" is notified. Accordingly, either one of the first backup motor or the second backup motor is switched on around 5 minutes from notification of the alarm message. Based on the alarm messages following the alarm message of the candidate alarm "conveyor belt failure", the notification server 120 can determine the asset utilization pattern of the first backup motor and the second backup motor. Upon startup of either motor an alarm message of non-candidate alarm backup motor start is notified and stored in the alarm database. Accordingly, by analyzing the historical alarm data, the notification server 120 can identify which backup motor get triggered often after conveyor belt failure and with what confidence i.e. asset utilization pattern.

By determining and comparing the association score of the alarm associated with first back up motor, and the association score of the second back up motor, the notification server 120 can determine which of the first or second backup motor is being used more often (i.e. has a greater association score than the other). For example, the notification server 120 identifies that non-candidate alarm associated with the first backup motor has an association score of 90% whereas the alarm associated with the second backup motor has an association score of 10%. Accordingly, the notification server 120 determines that the first backup motor is being excessively used (90 % of the instances of conveyor belt failure) over the second backup motor (10% of the instances of conveyor belt failure). This may lead to excessive wear and tear of the first backup motor over the second backup motor.

Accordingly, the notification server 120 coordinates with the control system 105 to ensure so that both motors are evenly utilized to avoid over/under utilization of a particular asset.

In an embodiment, upon detection of over utilization of an equipment, the notification server 120 is configured to generate an alarm message to indicate over utilization of the equipment.

It is to be noted by the person skilled in the art that while the notification server 120 has been indicated as a single device, the functionality of the notification server 120 can be performed using a plurality of servers. Additionally, it is to be noted by a person skilled in the art that the notification server 120 may reside in the plant or may in a remote location. In such an embodiment, the notification server 120 may be deployed on a cloud based infrastructure.

The approach presented above for critical alarm analysis is computationally less intensive. It is requires only simple mathematical operations. By ensuring that the historical data to be analyzed is focused around candidate alarms, the above mentioned approach is also computationally fast.

While only certain features of the invention have been illustrated and described herein, many modifications and changes will occur to those skilled in the art. It is, therefore, to be understood that the appended claims are intended to cover all such modifications and changes as fall within the invention.

**Claims**

1.    A method for managing alarms in a control system (100) in a process plant comprising a plurality of equipment, wherein the control system (100) comprises a notification server (120) for generating and notifying a plurality of alarms messages based on a predetermined notification criteria, an operator station (110) communicatively connected to the notification server (120), and a database (130) comprising historical alarm data, wherein each alarm message corresponds to an alarm and includes a timestamp associated with the generation of the particular alarm message, the method, by the notification server (120), comprising:

  a. receiving historical alarm data, wherein the historical alarm data includes data in relation to a plurality of alarm messages of a plurality of alarms;
  b. defining a set of alarms as one or more candidate alarms and set of alarms as non-candidate alarms from the plurality of alarms in the historical alarm data, wherein each candidate alarm is an alarm that has significant impact on the process operation as compared to non-candidate alarms;
  c. identifying a plurality of historical data segments of predetermined segment duration from the historical alarm data, wherein each segment from the plurality of historical data segments includes at least one alarm message of one candidate alarm from the one or more candidate alarms and one or more alarm messages of non-candidate alarms and wherein the segment is created around the instance at which the candidate alarm occured;
  d. determining a plurality of association scores corresponding to the plurality of non-candidate alarms, wherein an association score from the plurality of association score is indicative of an association between a corresponding non-candidate alarm from the historical alarm data, and a corresponding candidate alarm from one or more candidate alarms, wherein the association score is determined based on one or more instances of the corresponding non-candidate alarm in the plurality of segments and the one or more instances of alarm messages of the corresponding candidate alarm in the plurality of segments; and
  e. modifying the predetermined notification criteria on the basis of the plurality of association scores corresponding to the plurality of non-candidate alarms, wherein modifying the predetermined notification criteria includes one of prioritizing alarm messages of one or more non-candidate alarms associated with one or more candidate alarms, and suppressing alarm messages of one or more non-candidate alarms associated with one or more candidate alarms..

2.    The method as claimed in claim 1, further comprising

  a. determining equipment associated with a set of non-candidate alarms having corresponding association scores greater than a predetermined threshold value, wherein the one or more alarm messages of the set of non-candidate alarms are generated after one or more alarm messages of a candidate alarm ;
  and
  b. determining asset utilization pattern of the equipment based on the one or more alarm messages of the set of non-candidate alarms from historical alarm data.

3.    The method as claimed in claim 1, wherein determining an association score further comprising

  a. determining a time difference between an at least one alarm message of a non-candidate alarm and the at least one alarm of candidate alarm in a historical data segment from the plurality of historical data segments.

4.    The method as claimed in claim 1, further comprising

  a. monitoring real time alarm data for calculating a plurality of validation scores for the one or more non-candidate alarm having corresponding association score greater than a predetermined threshold, and
  b. comparing the plurality of validation scores against one or more threshold values for validating the modified notification criteria.

5. The method as claimed in claim 1, further comprising generating a notification indicating potential occurrence of a candidate alarm upon generation of an alarm message associated with a non-candidate alarm having an association score greater than a threshold value.

6. The method as claimed in claim 1, wherein defining a set of alarms as one or more candidate alarms and set of alarms as non-candidate alarms is based on one of a user input or a cause and effect matrix.

7. The method according to claim 1, wherein the notification server prioritize alarm messages of one or more non-candidate alarms which have association scores greater than a threshold value and precede one or more candidate alarms by a specified duration.

8. The method according to claim 1, wherein the notification server suppress alarm messages of one or more non-candidate alarms which have association scores greater than a threshold value and follow one or more candidate alarms within a specified duration.

**Patentansprüche**

1. Verfahren zum Verwalten von Alarmen in einem Steuersystem (100) in einer Prozessanlage, die eine Vielzahl von Geräten umfasst, wobei das Steuersystem (100) einen Benachrichtigungsserver (120) zum Erzeugen und Benachrichtigen einer Vielzahl von Alarmnachrichten auf der Grundlage von vorbestimmten Benachrichtigungskriterien, eine Bedienerstation (110), die kommunikativ mit dem Benachrichtigungsserver (120) verbunden ist, und eine Datenbank (130), die Alarmverlaufsdaten umfasst, umfasst, wobei jede Alarmnachricht einem Alarm entspricht und einen Zeitstempel aufweist, der mit der Erzeugung der bestimmten Alarmnachricht assoziiert ist, wobei das Verfahren durch den Benachrichtigungsserver (120) umfasst:

   a. Empfangen von Alarmverlaufsdaten, wobei die Alarmverlaufsdaten Daten in Bezug auf eine Vielzahl von Alarmnachrichten einer Vielzahl von Alarmen aufweisen;
   b. Definieren eines Satzes von Alarmen als einen oder mehrere Kandidatenalarme und eines Satzes von Alarmen als Nichtkandidatenalarme aus der Vielzahl von Alarmen in den Alarmverlaufsdaten, wobei jeder Kandidatenalarm ein Alarm ist, der im Vergleich zu Nichtkandidatenalarmen signifikante Auswirkungen auf den Prozessbetrieb hat;
   c. Identifizieren einer Vielzahl von Verlaufsdatensegmenten einer vorbestimmten Segmentdauer aus den Alarmverlaufsdaten, wobei jedes Segment aus der Vielzahl von Verlaufsdatensegmenten mindestens eine Alarmnachricht eines Kandidatenalarms aus dem einen oder den mehreren Kandidatenalarmen und eine oder mehrere Alarmnachrichten von Nichtkandidatenalarmen aufweist und wobei das Segment um die Instanz erstellt wird, bei der der Kandidatenalarm aufgetreten ist;
   d. Bestimmen einer Vielzahl von Assoziierungsbewertungen, die mit der Vielzahl von Nichtkandidatenalarmen korrespondieren, wobei eine Assoziierungsbewertung aus der Vielzahl von Assoziierungsbewertungen eine Assoziierung zwischen einem entsprechenden Nichtkandidatenalarm aus den Alarmverlaufsdaten und einem entsprechenden Kandidatenalarm aus einem oder mehreren Kandidatenalarmen anzeigt, wobei die Assoziierungsbewertung auf Grundlage einer oder mehrerer Instanzen des entsprechenden Nichtkandidatenalarms in der Vielzahl von Segmenten und der einen oder den mehreren Instanzen von Alarmnachrichten des entsprechenden Kandidatenalarms in der Vielzahl von Segmenten bestimmt wird; und
   e. Modifizieren der vorbestimmten Benachrichtigungskriterien auf der Grundlage der Vielzahl von Assoziierungsbewertungen, die der Vielzahl von Nichtkandidatenalarmen entsprechen, wobei das Modifizieren der vorbestimmten Benachrichtigungskriterien eines umfasst von: ein Priorisieren von Alarmnachrichten von einem oder mehreren Nichtkandidatenalarmen, die mit einem oder mehreren Kandidatenalarmen assoziiert sind, und Unterdrücken von Alarmmeldungen eines oder mehrerer Nichtkandidatenalarme, die mit einem oder mehreren Kandidatenalarmen assoziiert sind.

2. Verfahren nach Anspruch 1, ferner umfassend

   a. Bestimmen von Geräten, die mit einem Satz von Nichtkandidatenalarmen assoziiert sind, die entsprechende Assoziierungsbewertungen haben, die größer als ein vorbestimmter Schwellenwert sind, wobei die eine oder die mehreren Alarmnachrichten des Satzes von Nichtkandidatenalarmen nach einer oder mehreren Alarmnachrichten eines Kandidatenalarms erzeugt werden;
   und

b. Bestimmen des Anlagennutzungsmusters der Geräte auf Grundlage der einen oder der mehreren Alarmnachrichten des Satzes von Nichtkandidatenalarmen aus Alarmverlaufsdaten.

3. Verfahren nach Anspruch 1, wobei das Bestimmen einer Assoziierungsbewertung ferner umfasst

a. Bestimmen einer Zeitdifferenz zwischen einer mindestens einen Alarmnachricht eines Nichtkandidatenalarms und dem mindestens einen Alarm eines Kandidatenalarms in einem Verlaufsdatensegment aus der Vielzahl von Verlaufsdatensegmenten.

4. Verfahren nach Anspruch 1, ferner umfassend

a. Überwachen von Echtzeitalarmdaten zum Berechnen einer Vielzahl von Validierungsbewertungen für den einen oder die mehreren Nichtkandidatenalarme mit einer entsprechenden Assoziierungsbewertung, die größer als ein vorbestimmter Schwellenwert ist, und
b. Vergleichen der Vielzahl von Validierungsbewertungen mit einem oder mehreren Schwellenwerten zum Validieren der modifizierten Benachrichtigungskriterien.

5. Verfahren nach Anspruch 1, ferner umfassend das Erzeugen einer Benachrichtigung, die das potenzielle Auftreten eines Kandidatenalarms anzeigt, nach dem Erzeugen einer Alarmnachricht, die mit einem Nichtkandidatenalarm assoziiert ist, der eine Assoziierungsbewertung hat, die größer als ein Schwellenwert ist.

6. Verfahren nach Anspruch 1, wobei das Definieren eines Satzes von Alarmen als einen oder mehrere Kandidatenalarme und eines Satzes von Alarmen als Nichtkandidatenalarme auf einem von einer Benutzereingabe oder einer Ursache-Wirkung-Matrix basiert.

7. Verfahren nach Anspruch 1, wobei der Benachrichtigungsserver Alarmnachrichten eines oder mehrerer Nichtkandidatenalarme priorisiert, deren Assoziierungsbewertungen größer als ein Schwellenwert sind und einem oder mehreren Kandidatenalarmen eine bestimmte Zeitdauer vorausgehen.

8. Verfahren nach Anspruch 1, wobei der Benachrichtigungsserver Alarmnachrichten eines oder mehrerer Nichtkandidatenalarme unterdrückt, deren Assoziierungsbewertungen größer als ein Schwellenwert sind und einem oder mehreren Kandidatenalarmen innerhalb einer bestimmten Zeitdauer folgen.

**Revendications**

1. Procédé de gestion d'alarmes dans un système de commande (100) dans une installation de traitement comprenant une pluralité d'équipement, dans lequel le système de commande (100) comprend un serveur de notification (120) pour générer et notifier une pluralité de messages d'alarmes en fonction d'un critère de notification prédéfini, un poste d'opérateur (110) raccordé de manière communicante au serveur de notification (120), et une base de données (130) comprenant des données d'alarme historiques, dans lequel chaque message d'alarme correspond à une alarme et inclut un horodatage associé à la génération du message d'alarme particulier, le procédé, par le serveur de notification (120), comprenant :

a. la réception des données d'alarme historiques, dans lequel les données d'alarme historiques incluent des données en lien avec une pluralité de messages d'alarme d'une pluralité d'alarmes ;
b. la définition d'un ensemble d'alarmes comme une ou plusieurs alarmes candidates et un ensemble d'alarmes comme alarmes non candidates parmi la pluralité d'alarmes dans les données d'alarme historiques, dans lequel chaque alarme candidate est une alarme qui a un impact significatif sur l'opération de traitement par comparaison avec des alarmes non candidates ;
c. l'identification d'une pluralité de segments de données historiques de durée de segment prédéterminée parmi les données d'alarme historiques, dans lequel chaque segment parmi la pluralité de segments de données historiques inclut au moins un message d'alarme d'une alarme candidate parmi la ou les alarmes candidates et un ou plusieurs messages d'alarme d'alarmes non candidates et dans lequel le segment est créé autour de l'instance à laquelle l'alarme candidate est survenue ;
d. la détermination d'une pluralité de scores d'association correspondant à la pluralité d'alarmes non candidates, dans lequel un score d'association parmi la pluralité de score d'association indique une association entre une alarme non candidate correspondante parmi les données d'alarme historiques, et une alarme candidate correspondante parmi une ou plusieurs alarmes candidates, dans lequel le score d'association est déterminé en fonction d'une ou plusieurs instances de l'alarme non candidate correspondante dans la pluralité de segments et d'une ou plusieurs instances de messages d'alarme de l'alarme candidate correspondante dans la pluralité de segments ; et

e. la modification des critères de notification prédéterminés sur la base de la pluralité de scores d'association correspondant à la pluralité d'alarmes non candidates, dans lequel la modification des critères de notification prédéterminés inclut un des messages d'alarme de priorisation d'une ou plusieurs alarmes non candidates associées à une ou plusieurs alarmes candidates, et la suppression des messages d'alarme d'une ou plusieurs alarmes non candidates associées à une ou plusieurs alarmes candidates..

2. Procédé selon la revendication 1, comprenant en outre

a. la détermination de l'équipement associé à un ensemble d'alarmes non candidates ayant des scores d'association correspondants supérieurs à une valeur de seuil prédéterminée, dans lequel le ou les messages d'alarme de l'ensemble d'alarmes non candidates sont générés après un ou plusieurs messages d'alarme d'une alarme candidate ;

et

b. la détermination du motif d'utilisation de ressources de l'équipement en fonction du ou des messages d'alarme de l'ensemble d'alarmes non candidates à partir des données d'alarme historiques.

3. Procédé selon la revendication 1, dans lequel la détermination d'un score d'association comprenant en outre

a. la détermination d'une différence de temps entre un au moins un message d'alarme d'une alarme non candidate et l'au moins une alarme d'alarme candidate dans un segment de données historiques parmi la pluralité de segments de données historiques.

4. Procédé selon la revendication 1, comprenant en outre :

a. la surveillance des données d'alarme en temps réel pour calculer une pluralité de scores de validation pour la ou les alarmes non candidates ayant un score d'association correspondant supérieur à un seuil prédéterminé, et

b. la comparaison de la pluralité de scores de validation par rapport à une ou plusieurs valeurs de seuil pour valider les critères de notification modifiés.

5. Procédé selon la revendication 1, comprenant en outre la génération d'une notification indiquant une occurrence potentielle d'une alarme candidate lors de la génération d'un message d'alarme associé à une alarme non candidate ayant un score d'association supérieur à une valeur de seuil.

6. Procédé selon la revendication 1, dans lequel la définition d'un ensemble d'alarmes comme une ou plusieurs alarmes candidates et un ensemble d'alarmes comme des alarmes non candidates est basée sur l'une d'une entrée d'utilisateur ou d'une matrice de cause à effet.

7. Procédé selon la revendication 1, dans lequel le serveur de notification priorise des messages d'alarme d'une ou plusieurs alarmes non candidates qui ont des scores d'association supérieurs à une valeur de seuil et précèdent une ou plusieurs alarmes candidates d'une durée spécifiée.

8. Procédé selon la revendication 1, dans lequel le serveur de notification supprime des messages d'alarme d'une ou plusieurs alarmes non candidates qui ont des scores d'association supérieurs à une valeur de seuil et suivent une ou plusieurs alarmes candidates au sein d'une durée spécifiée.

**Fig. 1**

EP 3 187 950 B1

```
┌─────────────────────────────────────────────────────────────────────┐
│         RECEIVE HISTORICAL ALARM DATA FROM THE ALARM DATABASE         │──210
└─────────────────────────────────────────────────────────────────────┘
                                    │
                                    ▼
┌─────────────────────────────────────────────────────────────────────┐
│  DEFINE A SET OF ALARM TYPES AS ONE OR MORE CANDIDATE ALARM TYPES     │──220
│  AND SET OF ALARM TYPES AS NON-CANDIDATE ALARM TYPES                  │
└─────────────────────────────────────────────────────────────────────┘
                                    │
                                    ▼
┌─────────────────────────────────────────────────────────────────────┐
│  IDENTIFY A PLURALITY OF HISTORICAL DATA SEGMENTS OF PREDETERMINED    │──230
│  SEGMENT LENGTH FROM THE HISTORICAL ALARM DATA                        │
└─────────────────────────────────────────────────────────────────────┘
                                    │
                                    ▼
┌─────────────────────────────────────────────────────────────────────┐
│  DETERMINE A PLURALITY OF ASSOCIATION SCORES CORRESPONDING TO THE     │──240
│  PLURALITY OF NON-CANDIDATE ALARM TYPES                               │
└─────────────────────────────────────────────────────────────────────┘
                                    │
                                    ▼
┌─────────────────────────────────────────────────────────────────────┐
│  MODIFY A PREDETERMINED NOTIFICATION CRITERIA ON THE BASIS OF THE     │──250
│  PLURALITY OF ASSOCIATION SCORES                                      │
└─────────────────────────────────────────────────────────────────────┘
```

Figure 2

EP 3 187 950 B1

**Fig. 3**

**EP 3 187 950 B1**

**Patent documents cited in the description**

- US 5581242 A